# EUROPÄISCHE PATENTSCHRIFT

(11) **EP 4 113 360 B1**
(45) Veröffentlichungstag und Bekanntmachung des Hinweises auf die Patenterteilung: **23.10.2024**
(21) Anmeldenummer: 22178282.4
(22) Anmeldetag: 10.06.2022
(51) Int. Cl.: G06K 1/12, G06K 19/077, F16L 11/12, F16L 11/127

(54) **VERFAHREN ZUR HERSTELLUNG VON SCHLAUCH- UND ROHRLEITUNGEN MIT RFID-CHIPS**
METHOD FOR MANUFACTURING TUBING AND PIPELINES WITH RFID CHIPS
PROCÉDÉ DE FABRICATION DE TUYAUX ET DE CONDUITES À PUCES RFID

(30) Priorität: 30.06.2021 DE 102021206882
(43) Veröffentlichungstag der Anmeldung: 04.01.2023
(73) Patentinhaber: ContiTech Techno-Chemie GmbH, 61184 Karben (DE)
(72) Erfinder: Linzmaier, Markus, 30165 Hannover (DE); Borchert, Lukas, 30165 Hannover (DE); Reutter, Kilian, 30165 Hannover (DE); Zipf, Thomas, 30165 Hannover (DE)
(74) Vertreter: Continental Corporation

(56) Entgegenhaltungen:
- EP-A1- 3 699 471
- US-A1- 2013 284 299

## Beschreibung

Die Erfindung betrifft ein Verfahren zur Herstellung von Schlauch- und Rohrleitungsabschnitten mit RFID-Chips.

Schlauch- und Rohrleitungen sind teilweise ungünstigen Umwelt- und Betriebsbedingungen ausgesetzt, was insbesondere bei sicherheitsrelevanten Leitungen zur Folge hat, dass die Schlauch- und Rohrleitungen kontinuierlich überwacht werden müssen. Ist dies gegebenenfalls nicht möglich, ist es üblich, im Rahmen der vorbeugenden Instandhaltung Wechselintervalle festzulegen.

In beiden Fällen ist es notwendig, die Schlauch- und Rohrleitungen mindestens zu identifizieren und/oder aber mit einer kontinuierlich arbeitenden Sensorik auszustatten. Sowohl für die Identifikation als auch für die Signalübertragung von Sensoren haben sich in der Vergangenheit RFID-Chips etabliert, die auch im Bereich der Schlauch- und Rohrleitungstechnik zum Einsatz kommen.

Üblich sind RFID-Chips mit Antennen auf einem Trägermaterial in Form von Etiketten oder Streifen. Diese können nachträglich an der Schlauchaußenseite befestigt werden. Weiterhin ist es als Stand der Technik bekannt, dass die RFID-Chips auf Trägermaterial in Streifenform mit regelmäßigem Abstand zueinander und definierter Steigung um ein Kunststoffrohr gewunden bzw. spiralförmig aufgebracht werden. Die US 903 8670 B2 offenbart eine derartige Lösung.

Die nachträgliche Montage der die-Chips an der Schlauchaußenseite führt zu zusätzlichem Aufwand. Weitere Nachteile sind die Gefahr von Verlust oder Beschädigungen, fehlende Redundanz, die Verletzungsgefahr sowie die Ablagerungsmöglichkeiten von Verunreinigungen Einsparungen.

Die weitverbreiteten RFID-Chips auf Trägermaterial in Form von Etiketten oder Streifen eignen sich nicht zur Einbringung in den Schlauch während des Schlauchherstellungsprozesses. Durch Form, Format und bauartbedingt ergeben sich negative Auswirkungen auf die Produktperformance wie beispielsweise Delamination der Schichten, die letztlich zum Ausfall des Schlauches führen können.

In der US 2019/0 27 69 82 A1 ist eine Lösung vorgeschlagen, bei der ein Seil mit einem RFID-Faden ausgestattet ist, wobei der RFID-Faden eine fadenartige Trägerstruktur aufweist, auf der in vorbestimmten Abständen RFID-Chips angeordnet sind.

Eine derartige Fadenstruktur lässt sich statt einer Band förmigen Struktur deutlich besser in eine Elastomer Schicht eines Schlauches einbetten. Das oben erwähnte spiralförmige Aufwickeln der RFID-Fäden erfordert aber eine entsprechende Wickelvorrichtung, die bei der Schlauch- und Rohrleitungsproduktion oftmals für die verschiedenen Verstärkungslagen in den Leitungen genutzt wird und daher nicht für weitere Wickelvorgänge zur Verfügung steht. Außerdem ist mit dem Aufwickeln, insbesondere bei Leitungen mit größeren Durchmessern, ein hoher Verbrauch an RFID-Fäden verbunden.

In der DE 10 2006 061 798 A1 ist ein Verfahren zur Anbringung von Kennzeichen auf Substratoberflächen mit Hilfe eines Transferverfahrens offenbart, bei dem unmittelbar von einer präparierten oder vorgedruckten Release-Trägerfolie eine auf der Release-Trägerfolie
befindliche Transferschicht auf die Substratoberfläche übertragen wird und dort ein nur unter Zerstörung entfernbares Haftbild entstehen lässt.

Bei diesem Verfahren ist eine Transferfolie erforderlich, auf die die RFID-Struktur mit Antennen aufgebracht wird, die dann auf den zu kennzeichnenden Gegenstand übertragen werden muss.

Abgesehen davon, dass das Verfahren die Transferfolie als zusätzliches Bauteil benötigt, ist es auch mit zusätzlichen Arbeitsschritten verbunden und bedarf einer entsprechenden Vorbereitung.

Der Erfindung liegt die Aufgabe zugrunde, die bekannten Verfahren zur Einbettung von RFID-Chips in Schlauch- und Rohrleitungen so weiterzubilden, dass die Einbettung ohne nennenswerte Beeinflussung der mechanischen Eigenschaften des Produkts und mit geringem Aufwand möglich ist.

Diese Aufgabe wird dadurch gelöst, dass auf die äußere Oberfläche eines Schlauch- oder Rohrleitungsrohling eine linienförmige Struktur aus einem elektrisch leitfähigen Material aufgebracht wird und auf diese linienförmige Struktur in vorbestimmten Abständen RFID-Chips aufgesetzt werden, wobei die RFID-Chips mit der leitfähigen Struktur in elektrisch leitende Verbindung zu stehen kommen und die aufgebrachte linienförmige Struktur und die aufgesetzten RFID-Chips auf dem Schlauch- oder Rohrleitungsrohling fixiert und gemeinsam mit dem Schlauch- oder Rohrleitungsrohling fertiggestellt werden und anschließend die fertiggestellte Schlauch- oder Rohrleitung in Abschnitte vorbestimmter Länge zerteilt wird.

Dieses Verfahren hat den Vorteil, dass kein speziell ausgerüstetes Fadenmaterial bereitgestellt werden muss. Außerdem ist das Verfahren sehr flexibel, da der Abstand der RFID-Chips auf der als Antenne fungierenden leitfähige Struktur sehr einfach an die jeweiligen Ausführungsformen der Schlauch- oder Rohrleitungsrohlinge anpassbar ist.

In einer Weiterbildung der Erfindung ist die linienförmige Struktur aus einem elektrisch leitfähigen Kunststoff ausgebildet.

In einer Weiterbildung der Erfindung ist die linienförmige Struktur aus einem elektrisch leitenden Thermoplast ausgebildet.

In einer Weiterbildung der Erfindung ist die linienförmige Struktur aus einem elektrisch leitfähigen thermoplastischen Elastomer ausgebildet.

In einer Weiterbildung der Erfindung ist die linienförmige Struktur aus einem elektrisch leitfähigen Elastomermaterial ausgebildet.

Diese Werkstoffe eignen sich besonders gut, um mit den üblichen Materialien eines Schlauch- oder Rohrleitungsrohlings fest verbunden zu werden.

In einer Weiterbildung der Erfindung wird die linienförmige Struktur mit den aufgesetzten RFID-Chips mit dem Schlauch- oder Rohrleitungsrohling zusammenvulkanisiert.

In einer Weiterbildung der Erfindung wird die linienförmige Struktur mit den aufgesetzten RFID-Chips mit dem Schlauch- oder Rohrleitungsrohling zusammengeklebt.

In einer Weiterbildung der Erfindung wird die linienförmige Struktur mit den aufgesetzten RFID-Chips mit dem Schlauch- oder Rohrleitungsrohling zusammen ausgehärtet.

Mit den genannten Verfahren lassen sich eine große Vielzahl an verschiedenen Materialien zu der erfindungsgemäßen Schlauch- oder Rohrleitung verarbeiten.

In einer Weiterbildung der Erfindung werden die zur Zerteilung der fertig vulkanisierten Schlauch- oder Rohrleitung vorgesehenen Stellen durch die Erfassung der Lage der RFID-Chips auf der Schlauch- oder Rohrleitung und in vorbestimmten Abständen von der Lage der jeweiligen RFID-Chips bestimmt.

Dies hat den Vorteil, dass auf einfache Weise realisierbar ist, dass ein Schlauch- oder Rohrleitungsabschnitt immer genau einen RFID-Chip aufweist.

In einer Weiterbildung der Erfindung ist der Schlauch- oder Rohrleitungsrohling aus einem elastomeren Rohmaterial ausgebildet.

In einer Weiterbildung der Erfindung ist der Schlauch- oder Rohrleitungsrohling aus einem Kunststoff ausgebildet.

In einer Weiterbildung der Erfindung ist der Schlauch- oder Rohrleitungsrohling aus einem thermoplastisches Elastomer ausgebildet.

Die genannten Materialien lassen eine große Vielfalt an Kombinationen zu, sodass mit dem erfindungsgemäßen Verfahren ein breites Anwendungsgebiet abdeckbar ist.

In einer Weiterbildung der Erfindung wird die leitfähige Struktur auf den Schlauch- oder Rohrleitungsrohling aufextrudiert.

In einer Weiterbildung der Erfindung wird die leitfähige Struktur auf den Schlauch- oder Rohrleitungsrohling aufgedruckt.

In einer Weiterbildung der Erfindung ist das leitfähige Elastomermaterial eine elektrisch leitfähige Tinte.

Dieses Verfahren ermöglicht eine kontinuierliche Fertigung der Rohlinge, wobei elektrisch leitfähige Tinten besonders gut zum Drucken geeignet sind.

In einer Weiterbildung der Erfindung ist der elastomere Schlauch- oder Rohrleitungsrohling aus TPE-Material ausgebildet und ist in fertiger Form ein Schutzschlauch gegen Scheuerschäden der Schlauch- oder Rohrleitung.

Ein Schutzschlauch aus TPE Material verbessert die Abriebfestigkeit der Schlauch- oder Rohrleitung.

In einer Weiterbildung der Erfindung wird die elektrisch leitfähige Struktur einschließlich der aufgebrachten RFID-Chips mit einem Schutzüberzug gegen äußere Einflüsse ausgerüstet.

Ein solcher Schutzüberzug verbessert die Widerstandsfähigkeit gegen Abrieb der aufgebrachten Strukturen.

Die Erfindung betrifft weiter eine Vorrichtung zur Durchführung des erfindungsgemäßen Verfahrens.

Diese Vorrichtung ist dadurch gekennzeichnet, dass sie mindestens folgende Teile aufweist, nämlich
- eine Einrichtung zur Aufbringung einer linienförmigen elektrisch leitfähigen Struktur aus elektrisch leitfähigen Elastomermaterial auf die äußere Oberfläche eines Schlauch- oder Rohrleitungsrohlings,
- eine Einrichtung zum Aufsetzen der RFID-Chips auf die elektrisch leitfähige Struktur und den Schlauch- oder Rohrleitungsrohling, wobei die RFID-Chips (5) mit der linienförmigen Struktur (4) in elektrisch leitende Verbindung zu stehen kommen,
- eine Vulkanisation oder aus Aushärteeinrichtung zur Fertigstellung der Schlauch- oder Rohrleitung aus dem Schlauch- oder Rohrleitungsrohling (1) gemeinsam mit den RFID-Chips (5).

Diese Anordnung erlaubt eine sehr flexible Gestaltung des erfindungsgemäßen Verfahrens.

In einer Weiterbildung der Erfindung ist die Einrichtung zur Aufbringung der linienförmigen elektrisch leitfähigen Strukturen als Extrusionseinrichtung ausgebildet.

Eine Extrusionseinrichtung ermöglicht eine kontinuierliche Fertigung, wobei der Schlauch- oder Rohrleitungsrohling zusammen mit der elektrisch leitfähigen linienförmigen Struktur in einem Arbeitsgang erzeugbar ist.

In einer Weiterbildung der Erfindung ist die Einrichtung zur Aufbringung von linienförmigen elektrisch leitfähigen Strukturen ein Tintenstrahl-Druckkopf.

Ein Tintenstrahl-Druckkopf ist mit einfachen Mitteln programmierbar und erlaubt eine kontinuierliche, aber auch eine diskontinuierliche Aufbringung der elektrisch leitfähigen Strukturen.

In einer Weiterbildung der Erfindung weist die Vorrichtung weiter eine Einrichtung zur Erfassung der Lage von RFID-Chips auf der fertigen Schlauch- oder Rohrleitung, eine Vorschubeinrichtung und eine Zerteileinrichtung auf.

Eine derartige Anordnung ermöglicht, das Zerteilen der fertigen Schlauch- oder Rohrleitung in Abhängigkeit von der Lage der RFID-Chips zu realisieren, sodass sichergestellt ist, dass nach dem Zerteilen jeder Schlauch- oder Rohrleitungsabschnitt genau einen RFID Chip aufweist.

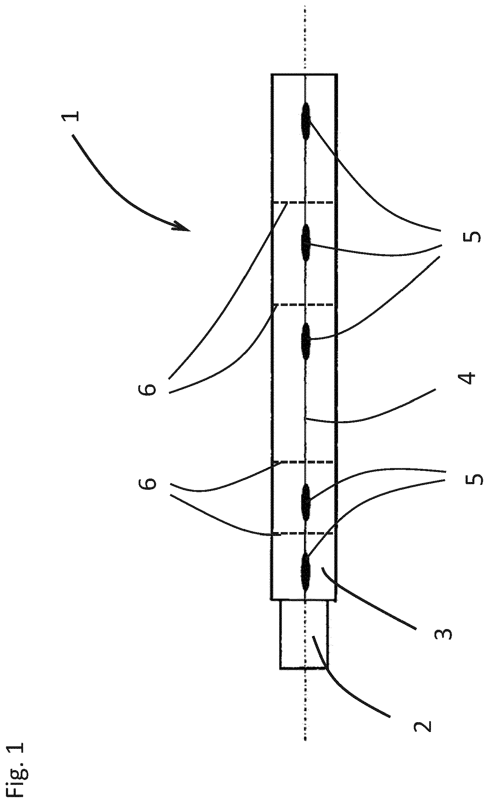

Anhand der Zeichnung wird nachstehend ein Beispiel der Erfindung näher erläutert. In der Fig. 1 ist ein mögliches Ergebnis des erfindungsgemäßen Verfahrens in einer Prinzipskizze gezeigt. Eine Schlauchleitung 1 weist einen inneren Grundschlauch 2 aus elastomerem Material auf. Um den Grundschlauch 2 herum ist ein TPE-Schutzschlauch 3 angeordnet, der um den Grundschlauch 2 herum extrudiert ist. Während der Extrusion des TPE-Schutzschlauchs 3 ist gleichzeitig eine linienförmige Struktur 4 aus elastomerem, elektrisch leitfähigen Material auf die Oberfläche des TPE-Schutzschlauchs 3 aufextrudiert worden. In vorbestimmten, nicht zwingend regelmäßigen Abständen sind auf diese linienförmige, elektrisch leitfähige Struktur 4 RFID-Chips 5 so aufgesetzt, dass sie mit der elektrisch leitfähigen Struktur in elektrischem Kontakt stehen.

Bei einer anschließenden Fertigstellung des Schutzschlauches 3, je nach verwendeten Materialien beispielsweise durch Vulkanisieren, Kleben oder Aushärten des Schutzschlauches 3 wird sowohl die elektrisch leitfähige, linienförmige Struktur 4 als auch die RFID-Chips 5 mit dem elastomeren Material des Schutzschlauches 3 fest verbunden. Die elektrisch leitfähige Struktur 4 dient dann als Antenne für die RFID-Chips 5.

Bei der nachfolgenden Zerteilung der fertigen Schlauch- oder Rohrleitung 1 dienen die RFID-Chips 5 als Markierung, sodass eine entsprechende, hier nicht gezeigte Zerteileinrichtung an den von den RFID-Chips 5 getriggert und in vorbestimmten Abstand von den RFID-Chips 5 angeordneten Stellen 6 die Schlauch- oder Rohrleitung 1 in einzelne Abschnitte zerteilt werden kann, wodurch sichergestellt ist, dass jeder Abschnitt genau einen RFID-Chip 5 aufweist und kein RFID-Chip 5 bei der Zerteilung zerstört wird.

### Bezugszeichenliste

### (Teil der Beschreibung)

- 1: Schlauch- oder Rohrleitungsrohling
- 2: Grundschlauch des Schlauch- oder Rohrleitungsrohlings 1
- 3: TPE-Schutzschlauch
- 4: linienförmige, elektrisch leitfähige Struktur
- 5: RFID-Chips
- 6: vorbestimmte Stellen zum Zerteilen der fertigen Schlauch- oder Rohrleitung

## Patentansprüche

1. Verfahren zur Herstellung von Schlauch- und Rohrleitungen (1) mit RFID-Chips (5), **dadurch gekennzeichnet, dass** auf die äußere Oberfläche eines Schlauch- oder Rohrleitungsrohlings (1) eine linienförmige Struktur (4) aus einem elektrisch leitfähigen Material aufgebracht wird und auf diese linienförmige Struktur (4) in vorbestimmten Abständen RFID-Chips (5) aufgesetzt werden, wobei die RFID-Chips (5) mit der linienförmigen Struktur (4) in elektrisch leitende Verbindung zu stehen kommen und die aufgebrachte linienförmige Struktur (4) und die aufgesetzten RFID-Chips (5) auf dem Schlauch- oder Rohrleitungsrohling (1) fixiert und gemeinsam mit dem Schlauch- oder Rohrleitungsrohling (1) fertig gestellt werden und anschließend die fertig gestellte Schlauch- oder Rohrleitung in Abschnitte vorbestimmter Länge zerteilt wird.

2. Verfahren nach Anspruch 1, **dadurch gekennzeichnet, dass** die linienförmige Struktur (4) aus einem elektrisch leitfähigen Kunststoff ausgebildet ist.

3. Verfahren nach Anspruch 1, **dadurch gekennzeichnet, dass** die linienförmige Struktur (4) aus einem elektrisch leitenden Thermoplast ausgebildet ist

4. Verfahren nach Anspruch 1, **dadurch gekennzeichnet, dass** die linienförmige Struktur (4) aus einem elektrisch leitenden thermoplastischen Elastomer ausgebildet ist.

5. Verfahren nach Anspruch 1, **dadurch gekennzeichnet, dass** die linienförmige Struktur (4) aus einem elektrisch leitfähigen Elastomer ausgebildet ist.

6. Verfahren nach einem der vorstehenden Ansprüche, **dadurch gekennzeichnet, dass** die linienförmige Struktur (4) mit den aufgesetzten RFID-Chips (5) mit dem Schlauch- oder Rohrleitungsrohling (1) zusammenvulkanisiert wird.

7. Verfahren nach einem der Ansprüche 1 bis 5, **dadurch gekennzeichnet, dass** die linienförmige Struktur (4) mit den aufgesetzten RFID-Chips (5) mit dem Schlauch- oder Rohrleitungsrohling (1) zusammengeklebt wird.

8. Verfahren nach einem der Ansprüche 1 bis 5, **dadurch gekennzeichnet, dass** die linienförmige Struktur (4) mit den aufgesetzten RFID-Chips (5) mit dem Schlauch- oder Rohrleitungsrohling (1) zusammen ausgehärtet wird.

9. Verfahren nach mindestens einem der vorstehenden Ansprüche, **dadurch gekennzeichnet, dass** die zur Zerteilung der fertig vulkanisierten Schlauch- oder Rohrleitung vorgesehenen Stellen (6) durch die Erfassung der Lage der RFID-Chips (5) auf der fertigen Schlauch- oder Rohrleitung und in vorbestimmten Abständen von der Lage der jeweiligen RFID-Chips (5) bestimmt werden.

10. Verfahren nach mindestens einem der vorstehenden Ansprüche, **dadurch gekennzeichnet, dass** der Schlauch- oder Rohrleitungsrohling aus einem elastomeren Rohmaterial ausgebildet ist

11. Verfahren nach mindestens einem der Ansprüche 1 bis 9, **dadurch gekennzeichnet, dass** der Schlauch- oder Rohrleitungsrohling (1) aus einem Kunststoff ausgebildet ist.

12. Verfahren nach mindestens einem der Ansprüche 1 bis 9, **dadurch gekennzeichnet, dass** der Schlauch- oder Rohrleitungsrohling (1) aus einem thermoplastischen Elastomer ausgebildet ist.

13. Verfahren nach mindestens einem der vorstehenden Ansprüche, **dadurch gekennzeichnet, dass** die leitfähige Struktur (4) auf den Schlauch- oder Rohrleitungsrohling (1) aufextrudiert wird.

14. Verfahren nach mindestens einem der Ansprüche 1 bis 12, **dadurch gekennzeichnet, dass** die leitfähige Struktur (4) auf den Schlauch- oder Rohrleitungsrohling (1) aufgedruckt wird.

15. Verfahren nach Anspruch 14, **dadurch gekennzeichnet, dass** das leitfähige Elastomermaterial (4) eine elektrisch leitfähige Tinte ist.

16. Verfahren nach mindestens einem der vorstehenden Ansprüche, **dadurch gekennzeichnet, dass** die elektrisch leitfähige Struktur (4) einschließlich der aufgebrachten RFID-Chips (5) mit einem Schutzüberzug gegen äußere Einflüsse ausgerüstet werden.

17. Verfahren nach Anspruch 16, **dadurch gekennzeichnet, dass** der Schutzüberzug aus thermoplastischem Elastomermaterial (TPE-Material) ausgebildet ist.

18. Vorrichtung zur Durchführung des Verfahrens nach einem der vorangehenden Ansprüche, **dadurch gekennzeichnet, dass** sie mindestens folgende Teile aufweist, nämlich
- eine Einrichtung zur Aufbringung einer linienförmigen elektrisch leitfähigen Struktur (4) aus elektrisch leitfähigen Elastomermaterial auf die äußere Oberfläche eines Schlauch- oder Rohrleitungsrohlings (1),
- eine Einrichtung zum Aufsetzen der RFID-Chips (5) auf die elektrisch leitfähige Struktur (4) und den Schlauch- oder Rohrleitungsrohling (1), wobei die RFID-Chips (5) mit der linienförmigen Struktur (4) in elektrisch leitende Verbindung zu stehen kommen,
- eine Vulkanisations- oder Klebe- oder Aushärteeinrichtung zur Fertigstellung der Schlauch- oder Rohrleitung aus dem Schlauch- oder Rohrleitungsrohling (1) gemeinsam mit den RFID-Chips (5).

19. Vorrichtung nach Anspruch 18, **dadurch gekennzeichnet, dass** die Einrichtung zur Aufbringung der linienförmigen elektrisch leitfähigen Strukturen (4) als Extrusionseinrichtung ausgebildet ist.

20. Vorrichtung nach Anspruch 18, **dadurch gekennzeichnet, dass** die Einrichtung zur Aufbringung von linienförmigen elektrisch leitfähigen Strukturen(4) als Tintenstrahl-Druckkopf ausgebildet ist.

21. Vorrichtung nach Anspruch 18, 19 oder 20, **dadurch gekennzeichnet, dass** die Vorrichtung weiter eine Einrichtung zur Erfassung der Lage von RFID-Chips (5) auf der fertigen Schlauch- oder Rohrleitung, eine Vorschubeinrichtung und eine Zerteileinrichtung aufweist.

## Claims

1. Method for producing hoselines and pipelines (1) with RFID chips (5), **characterized in that** a linear structure (4) composed of an electrically conductive material is applied to the outer surface of a hoseline or pipeline blank (1) and RFID chips (5) are mounted on this linear structure (4) at predetermined distances, wherein the RFID chips (5) come into electrically conductive connection with the linear structure (4), and the applied linear structure (4) and the mounted RFID chips (5) are fixed on the hoseline or pipeline blank (1) and are completed together with the hoseline or pipeline blank (1) and then the completed hoseline or pipeline is split into sections of predetermined length.

2. Method according to Claim 1, **characterized in that** the linear structure (4) is formed from an electrically conductive plastic.

3. Method according to Claim 1, **characterized in that** the linear structure (4) is formed from an electrically conductive thermoplastic.

4. Method according to Claim 1, **characterized in that** the linear structure (4) is formed from an electrically conductive thermoplastic elastomer.

5. Method according to Claim 1, **characterized in that** the linear structure (4) is formed from an electrically conductive elastomer.

6. Method according to any of the preceding claims, **characterized in that** the linear structure (4) with the mounted RFID chips (5) is vulcanized together with the hoseline or pipeline blank (1).

7. Method according to any of Claims 1 to 5, **characterized in that** the linear structure (4) with the mounted RFID chips (5) is adhesively bonded to the hoseline or pipeline blank (1).

8. Method according to any of Claims 1 to 5, **characterized in that** the linear structure (4) with the mounted RFID chips (5) is cured together with the hoseline or pipeline blank (1).

9. Method according to at least one of the preceding claims, **characterized in that** the locations (6) intended for splitting the completely vulcanized hoseline or pipeline are determined by detecting the position of the RFID chips (5) on the complete hoseline or pipeline and at predetermined distances from the position of the respective RFID chips (5).

10. Method according to at least one of the preceding claims, **characterized in that** the hoseline or pipeline blank is formed from an elastomeric raw material.

11. Method according to at least one of Claims 1 to 9, **characterized in that** the hoseline or pipeline blank (1) is formed from a plastic.

12. Method according to at least one of Claims 1 to 9, **characterized in that** the hoseline or pipeline blank (1) is formed from a thermoplastic elastomer.

13. Method according to at least one of the preceding claims, **characterized in that** the conductive structure (4) is extruded onto the hoseline or pipeline blank (1).

14. Method according to at least one of Claims 1 to 12, **characterized in that** the conductive structure (4) is printed onto the hoseline or pipeline blank (1).

15. Method according to Claim 14, **characterized in that** the conductive elastomer material (4) is an electrically conductive ink.

16. Method according to at least one of the preceding claims, **characterized in that** the electrically conductive structure (4) including the mounted RFID chips (5) is equipped with a protective coating against external influences.

17. Method according to Claim 16, **characterized in that** the protective coating is formed from thermoplastic elastomer material (TPE material).

18. Apparatus for carrying out the method according to any of the preceding claims, **characterized in that** it comprises at least the following parts, specifically:
- a device for applying a linear electrically conductive structure (4) composed of electrically conductive elastomer material to the outer surface of a hoseline or pipeline blank (1),
- a device for mounting the RFID chips (5) onto the electrically conductive structure (4) and the hoseline or pipeline blank (1), wherein the RFID chips (5) come into electrically conductive connection with the linear structure (4),
- a vulcanization or adhesive bonding or curing device for completing the hoseline or pipeline from the hoseline or pipeline blank (1) together with the RFID chips (5).

19. Apparatus according to Claim 18, **characterized in that** the device for applying the linear electrically conductive structures (4) is in the form of an extrusion device.

20. Apparatus according to Claim 18, **characterized in that** the device for applying linear electrically conductive structures (4) is in the form of an inkjet print head.

21. Apparatus according to Claim 18, 19 or 20, **characterized in that** the apparatus also has a device for detecting the position of RFID chips (5) on the complete hoseline or pipeline, a feed device and a splitting device.

## Revendications

1. Procédé de fabrication de conduites en tuyaux souples et rigides (1) comprenant des puces RFID (5), **caractérisé en ce qu'**une structure linéaire (4) en un matériau électriquement conducteur est appliquée sur la surface extérieure d'une ébauche de conduite en tuyau souple ou rigide (1) et des puces RFID (5) sont déposées sur cette structure linéaire (4) à des écarts prédéterminés, les puces RFID (5) étant amenées à être en liaison électriquement conductrice avec la structure linéaire (4) et la structure linéaire (4) appliquée et les puces RFID (5) déposées étant calées sur l'ébauche de conduite en tuyau souple ou rigide (1) et étant achevées conjointement avec l'ébauche de conduite en tuyau souple ou rigide (1) et ensuite la conduite en tuyau souple ou rigide achevée est divisée en portions de longueur prédéterminée.

2. Procédé selon la revendication 1, **caractérisé en ce que** la structure linéaire (4) est formée à partir d'une matière plastique électriquement conductrice.

3. Procédé selon la revendication 1, **caractérisé en ce que** la structure linéaire (4) est formée à partir d'un thermoplastique électriquement conducteur.

4. Procédé selon la revendication 1, **caractérisé en ce que** la structure linéaire (4) est formée à partir d'un élastomère thermoplastique électriquement conducteur.

5. Procédé selon la revendication 1, **caractérisé en ce que** la structure linéaire (4) est formée à partir d'un élastomère électriquement conducteur.

6. Procédé selon l'une des revendications précédentes, **caractérisé en ce que** la structure linéaire (4) comprenant les puces RFID (5) déposées est vulcanisée conjointement avec l'ébauche de conduite en tuyau souple ou rigide (1).

7. Procédé selon l'une des revendications 1 à 5, **caractérisé en ce que** la structure linéaire (4) comprenant les puces RFID (5) déposées est collée conjointement avec l'ébauche de conduite en tuyau souple ou rigide (1).

8. Procédé selon l'une des revendications 1 à 5, **caractérisé en ce que** la structure linéaire (4) comprenant les puces RFID (5) déposées est durcie conjointement avec l'ébauche de conduite en tuyau souple ou rigide (1).

9. Procédé selon au moins l'une des revendications précédentes, **caractérisé en ce que** les emplacements (6) prévus pour la division de la conduite en tuyau souple ou rigide vulcanisée finie sont déterminés par la détection de la position des puces RFID (5) sur la conduite en tuyau souple ou rigide finie et à des écarts prédéterminés de la position des puces RFID (5) respectives.

10. Procédé selon au moins l'une des revendications précédentes, **caractérisé en ce que** l'ébauche de conduite en tuyau souple ou rigide est formée à partir d'un matériau brut élastomère.

11. Procédé selon au moins l'une des revendications 1 à 9, **caractérisé en ce que** l'ébauche de conduite en tuyau souple ou rigide (1) est formée à partir d'une matière plastique.

12. Procédé selon au moins l'une des revendications 1 à 9, **caractérisé en ce que** l'ébauche de conduite en tuyau souple ou rigide (1) est formée à partir d'un élastomère thermoplastique.

13. Procédé selon au moins l'une des revendications précédentes, **caractérisé en ce que** la structure conductrice (4) est extrudée sur l'ébauche de conduite en tuyau souple ou rigide (1).

14. Procédé selon au moins l'une des revendications 1 à 12, **caractérisé en ce que** la structure conductrice (4) est imprimée sur l'ébauche de conduite en tuyau souple ou rigide (1).

15. Procédé selon la revendication 14, **caractérisé en ce que** le matériau élastomère conducteur (4) est une encre électriquement conductrice.

16. Procédé selon au moins l'une des revendications précédentes, **caractérisé en ce que** la structure électriquement conductrice (4), y compris les puces RFID (5) appliquées, est équipée d'un revêtement protecteur contre les influences extérieures.

17. Procédé selon la revendication 16, **caractérisé en ce que** le revêtement protecteur est formé d'un matériau élastomère thermoplastique (matériau TPE).

18. Arrangement pour mettre en oeuvre le procédé selon l'une des revendications précédentes, **caractérisé en ce qu'**il comprend au moins les parties suivantes, à savoir
- un dispositif destiné à appliquer une structure linéaire (4) électriquement conductrice en matériau élastomère électriquement conducteur sur la surface extérieure d'une ébauche de conduite en tuyau souple ou rigide (1),
- un dispositif destiné à déposer les puces RFID (5) sur la structure électriquement conductrice (4) et sur l'ébauche de conduite en tuyau souple ou rigide (1), les puces RFID (5) étant amenées à être en liaison électriquement conductrice avec la structure linéaire (4),
- un dispositif de vulcanisation ou de collage ou de durcissement destiné à achever la conduite en tuyau souple ou rigide à partir de l'ébauche de conduite en tuyau souple ou rigide (1) conjointement avec les puces RFID (5).

19. Arrangement selon la revendication 18, **caractérisé en ce que** le dispositif destiné à l'application des structures linéaires (4) électriquement conductrices est réalisé sous la forme d'un dispositif d'extrusion.

20. Arrangement selon la revendication 18, **caractérisé en ce que** le dispositif destiné à l'application de structures linéaires (4) électriquement conductrices est réalisé sous la forme d'une tête d'impression à jet d'encre.

21. Arrangement selon la revendication 18, 19 ou 20, **caractérisé en ce que** l'arrangement possède en outre un dispositif de détection de la position de puces RFID (5) sur la conduite en tuyau souple ou rigide finie, un dispositif d'avance et un dispositif de division.
